# EUROPEAN PATENT APPLICATION

(11) **EP 2 731 319 A1**
(43) Date of publication of application: **14.05.2014**
(21) Application number: 13192663.6
(22) Date of filing: 13.11.2013
(51) Int. Cl.: H04M 1/64, H04M 1/663, H04M 1/725, H04M 1/57

(54) **Method and electronic device for providing rejection message depending on situation**

(30) Priority: 13.11.2012 KR 20120128052
(71) Applicant: Samsung Electronics Co., Ltd, Gyeonggi-do 443-742 (KR)
(72) Inventor: Jung, Jiyeon, 443-742 Gyeonggi-do (KR); Park, Jin, 443-742 Gyeonggi-do (KR)
(74) Representative: Nederlandsch Octrooibureau

(57) **Abstract**

A method and electronic device for a rejection message suitable for a situation in response to an incoming call are provided. In the method, the electronic device identifies a predefined situation mode when the incoming call arrives. Then the device displays a call rejection item for allowing transmission of a rejection message on a call reception screen. The rejection message is created depending on the situation mode.

## Description

### TECHNICAL FIELD

The present disclosure relates to a communication function of an electronic device. More particularly, the present disclosure relates to a method and electronic device for providing a rejection message suitable for a situation in response to an incoming call.

### BACKGROUND

Nowadays a great variety of electronic devices having a communication function are increasingly popularized due to the high usability and good portability of such electronic device. As a result of an increase in the incorporation of a touch screen into the electronic devices and a support by hardware and software that have ability to offer various contents, demand for such electronic devices is now showing a dramatic growth.

Meanwhile, a communication function provided by electronic devices is one of essential functions to users. For users who make or receive a call using such a communication function, various techniques to allow a more convenient call have been proposed and developed. For example, most electronic devices according to the related art merely supported a voice call function. However, electronic devices according to the related art have been developed to further provide a video call function. A communication function of electronic devices according to the related art may often create disturbance to user's duties or reduce user's concentration level. A user may turn off a communication function to prevent such problems. However, turning off a communication function may invite undesirable circumstances in which a user fails to receive any important call.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a method and electronic device for providing a rejection message suitable for a situation in response to an incoming call.

Another aspect of the present disclosure is to provide a method for providing a rejection message based on a situation. This method may include identifying a predefined situation mode when an incoming call arrives, and displaying a call rejection item for allowing transmission of a rejection message on a call reception screen, the rejection message being created depending on the situation mode.

In accordance with another aspect of the present disclosure, an electronic device for providing a rejection message based on a situation may be provided. The electronic device may include a control unit, a display unit and a communication unit. The control unit may be configured to identify a predefined situation mode when an incoming call arrives, and to create a rejection message depending on the situation mode. The display unit may be configured to display a call rejection item for allowing transmission of the rejection message on a call reception screen. The communication unit may be configured to receive the incoming call from a caller device.

In accordance with another aspect of the present disclosure, method for providing a rejection message based on a situation may be provided. The method may include identifying a predefined situation mode when an incoming call arrives, and transmitting a rejection message to a caller device associated the incoming call, the rejection message being created depending on the situation mode.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:

FIG. 1 is a block diagram illustrating an electronic device for providing a rejection message depending on a situation according to an embodiment of the present disclosure.

FIG. 2 is a block diagram illustrating a control unit of an electronic device such as, for example, the electronic device illustrated in FIG. 1according to an embodiment of the present disclosure.

FIG. 3 is a flow diagram illustrating a method for providing a rejection message depending on a situation according to an embodiment of the present disclosure.

FIG. 4 is a flow diagram illustrating a method for providing a rejection message depending on a situation according to an embodiment of the present disclosure.

FIG. 5 is a flow diagram illustrating a method for providing a rejection message depending on a situation according to an embodiment of the present disclosure.

FIG. 6 illustrates a screenshot illustrating a setting mode for a rejection message according to an embodiment of the present disclosure.

FIG. 7 illustrates screenshots illustrating a process of providing a rejection message depending on a situation according to an embodiment of the present disclosure.

FIG. 8 illustrates screenshots illustrating a process of providing a rejection message depending on a situation according to an embodiment of the present disclosure.

FIG. 9 illustrates screenshots illustrating a process of providing a rejection message depending on a situation according to an embodiment of the present disclosure.

FIG. 10 illustrates screenshots illustrating a process of providing a rejection message depending on a situation according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

It is to be understood that the singular forms "a," "an," and "the" include plural referents unless the context clearly dictates otherwise. Thus, for example, reference to "a component surface" includes reference to one or more of such surfaces.

As a non-exhaustive illustration only, an electronic device described herein may refer to mobile devices such as a cellular phone, a Personal Digital Assistant (PDA), a digital camera, a portable game console, an MP3 player, a Portable/Personal Multimedia Player (PMP), a handheld e-book, a tablet PC, a portable lap-top PC, a Global Positioning System (GPS) navigation, and devices such as a desktop PC, a high definition television (HDTV), an optical disc player, a set-top box, and the like capable of wireless communication or network communication consistent with that disclosed herein.

As a non-exhaustive illustration only, a rejection message described herein may refer to an e-mail, a Short Message Service (SMS) message, a Multimedia Messaging Service (MMS) message, a message transmitted over a Social Networking Service (SNS), and/or the like.

According to various embodiments of the present disclosure, a receiving device may transmit a rejection message to a calling device. According to various embodiments of the present disclosure, the receiving device may transmit the rejection message to the calling device automatically based on the context of the receiving device. According to various embodiments of the present disclosure, the receiving device may selectively transmit the rejection message to the calling device based on user input.

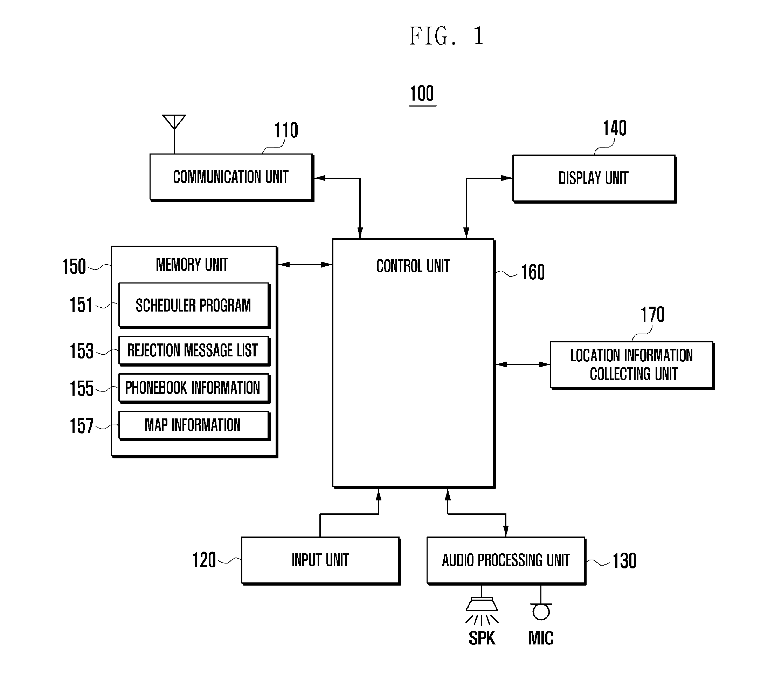

FIG. 1 is a block diagram illustrating an electronic device for providing a rejection message depending on a situation according to an embodiment of the present disclosure.

Referring to FIG. 1, the electronic device 100 may include a communication unit 110, an input unit 120, an audio processing unit 130, a display unit 140, a memory unit 150, a control unit 160, and a location information collecting unit 170. According to various embodiments of the present disclosure, the display unit 140 may have a touch-sensitive surface and thus may perform an input function together with the input unit 120.

When any incoming call arrives from a caller device, the electronic device 100 may provide a predefined rejection message to the caller device in response to the incoming call. Specifically, the electronic device 100 may find schedule information stored in the memory unit 150, determine whether any task is being performed according to such schedule information, and thereby determine whether to apply a schedule mode. Thereafter, the electronic device 100 may provide a particular rejection message defined with regard to the schedule mode to the caller device. Additionally or alternatively, the electronic device 100 may collect information associated with the caller device, select the type of a rejection message on the basis of the collected information, and provide a particular rejection message of selected type to the caller device. According to various embodiments of the present disclosure, the latter process based on information about the caller device may be performed separately from the former process based on the schedule information.

The communication unit 110 may establish a communication channel based on access to a selected network. Further, the communication unit 110 may perform access to a network of a specific service operator and receive an incoming call from a caller device through the network. The communication unit 110 may transfer the received incoming call to the control unit 160. Moreover, the communication unit 110 may provide a predefined rejection message to the caller device under the control of the control unit 160 while the incoming call is received. Specifically, the communication unit 110 may create at least one of a message service channel and a data communication channel, and transmit a rejection message through at least one of both channels under the control of the control unit 160. In addition, the communication unit 110 may receive schedule information from a caller device. This received information may be recorded in specific date and time of a scheduler that supports a schedule function.

The input unit 120 may create various input signals required for the operation of the electronic device 100. Depending on compatibility of the electronic device 100, the input unit 120 may employ any of various input mechanisms such as a keyboard, a keypad, key buttons, and the like. Additionally or alternatively, the input unit 120 may be realized in the form of a virtual touch map which is displayed on a touch screen composed of a touch panel and a display panel. In addition, the input unit 120 may be formed of a touch pen and a pen touch panel. Moreover, the input unit 120 may have a special key button or virtual key map which is designed to create or edit a rejection message. Using the input unit 120, a user can write various rejection messages for various schedule modes, and also write rejection messages having the same schedule mode but different contents suitable for respective types of caller. Further, the input unit 120 may create an input signal for entering schedule information. Namely, using the input unit 120, a user can invoke a schedule function and enter schedule information including specific date, time, location, and the like. Further, the input unit 120 may create an input event that instructs the electronic device 100 to transmit a predefined rejection message in response to an incoming call. For this, the electronic device 100 may output, on the display unit 140, a virtual control key map that includes a call connection button for accepting an incoming call, a call disconnection button for ending an incoming call, and a call rejection button for rejecting an incoming call and also sending a rejection message. A user who wants to reject an incoming call and send a rejection message can create an input event for selecting a call rejection button through the input unit 120.

The audio processing unit 130 may output audio data defined during the operation of the electronic device 100, audio data associated with playback of audio files stored in the memory unit 150, audio data received from any external entities, and the like. In addition, the audio processing unit 130 may support a function to collect audio data. For the above, the audio processing unit 130 may include a speaker (SPK) and a microphone (MIC). Particularly, the audio processing unit 130 may output various feedback sounds or sound effects in connection with situation-dependent rejection messages. For example, when an incoming call arrives, the audio processing unit 130 may output a specific feedback sound, ringtone or sound effect. In addition, when a user selects the rejection of an incoming call and the transmission of a rejection message, the audio processing unit 130 may output a corresponding feedback sound or sound effect. Further, the audio processing unit 130 may send the guidance on a schedule mode together with a rejection message. Such a function to output feedback sounds and sound effects may be inactivated according to a user's setting.

The display unit 140 may display a variety of screens required for the operation of the electronic device 100. For example, the display unit 140 may offer an idle screen, a menu screen, a memo or email writing screen, a webpage screen, and the like. The display unit 140 may be formed of a touch screen having a touch panel and a display panel, thus supporting an input function as well as a display function. Meanwhile, the display unit 140 may display some screens associated with situation-dependent rejection messages. For example, the display unit 140 may display a schedule information input screen, a schedule mode setting screen for providing rejection messages according to schedule information, a rejection message writing screen, a virtual key map screen for instructing the transmission of a predefined rejection message in response to an incoming call, a screen for setting an incoming call rejection mode, and the like. Such screen interfaces of the display unit 140 will be fully described below with reference to drawings.

The memory unit 150 may store an operating system and programs required for the operation of the electronic device 100. Further, the memory unit 150 may store data, applications and algorithms in connection with various user functions. Particularly, to support a function to provide various rejection messages on the basis of situations, the memory unit 150 may store a scheduler program 151, a rejection message list 153, phonebook information 155, and map information 157.

The scheduler program 151 may include a schedule management routine for supporting the input of schedule information and a schedule mode setting routine associated with rejection messages. The schedule management routine may have a routine for offering a calendar, a routine for entering schedule information in selected date and time of the calendar, and a routine for entering a location at which the entered schedule information is executed. This location entering routine may have a routine for retrieving the map information 157 and a routine for adding a specific location selected in the map information 157 to the schedule information.

The schedule mode setting routine may activate or inactivate an incoming call rejection mode to determine whether to automatically reject an incoming call when any schedule is set. Additionally, the schedule mode setting routine may have some routines for providing a selected one of rejection messages classified according to the contents of schedules to a caller device. For example, the schedule mode setting routine may have a basic mode setting routine for providing a default rejection message when there is a normal schedule, a meeting mode setting routine for providing a rejection message associated with a meeting situation in response to a meeting schedule, a driving mode setting routine for providing a rejection message associated with a driving situation, a studying mode setting routine for providing a rejection message associated with a studying situation, and the like. In addition, the schedule mode setting routine may have a routine for creating a new mode or removing any existing mode.

The rejection message list 153 is a list of rejection messages corresponding to respective schedule modes. For example, the rejection message list 153 may include a rejection message to be provided in a basic mode, a rejection message to be provided in a meeting mode, a rejection message to be provided in a driving mode, a rejection message to be provided in a studying mode, and the like. In addition, the rejection message list 153 may include some rejection messages having different contents with regard to the same mode.

The phonebook information 155 may include various types of information associated with other device users such as a photo image, a phone number, a call history, and the like. Particularly, the phonebook information 155 may further have classification information about other device users. For example, classification information may have various items such as brothers, friends, parents, relatives, schoolmates, alumni, coworkers, and the like. When creating or editing the phonebook information 155, a user can classify other device users according to such items of classification information.

The map information 157 may be provided for adding a specific location to schedule information. The map information 157 may be provided as the default or at a user's request after date and time are appointed and then schedule content is entered. If there is no input of location information from a user, either a specific location at which schedule information is entered or all locations may be entered as location information. In addition, the map information 157 may be used to determine a schedule mode when an incoming call arrives. Namely, the location information registered in schedule information may be used to determine whether the electronic device 100 is located at that location at a registered schedule time. If the electronic device 100 is located at a registered location, the electronic device 100 may perform a particular function for a schedule mode.

The location information collecting unit 170 may be used to detect at least one of current location information and movement information of the electronic device 100. The location information collecting unit 170 may be activated on receipt of an incoming call, collect current location information of the electronic device 100, and send it to the control unit 160. Alternatively, the location information collecting unit 170 may obtain movement information of the device 100 by collecting periodically current location information of the electronic device 100 after activated on receipt of an incoming call, and send it to the control unit 160 at intervals. Based on such location information or movement information, the control unit 160 may determine whether the electronic device 100 is located at a specific location registered in schedule information or moved.

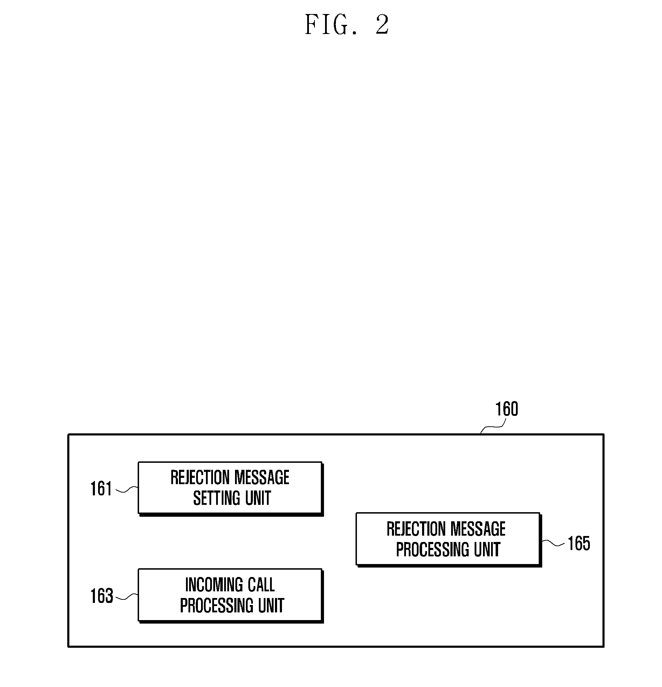

The control unit 160 may control the flow of signals, the collection and processing of data, and the output of information so as to support a function to provide a rejection message depending on a situation. For the above, the control unit 160 may include elements illustrated in FIG. 2.

FIG. 2 is a block diagram illustrating a control unit an electronic device such as, for example, the electronic device illustrated in FIG. 1according to an embodiment of the present disclosure.

Referring to FIG. 2, the control unit 160 may include a rejection message setting unit 161, an incoming call processing unit 163, and a rejection message processing unit 165.

The rejection message setting unit 161 may be configured to create, edit or remove a schedule mode and a rejection message. For this, the rejection message setting unit 161 may selectively offer a schedule mode setting screen and a rejection message setting screen and also offer a menu item or a related icon to selectively call such a screen. Additionally or alternatively, the rejection message setting unit 161 may allow a user to select a setting process of a schedule mode and a rejection message during an input process of schedule information. Namely, the rejection message setting unit 161 may offer a specific item for setting a schedule mode and a rejection message to a schedule information input screen. Therefore, when entering schedule information, a user can set up a desired schedule mode such as a meeting mode or a studying mode and also create or edit a rejection message associated with such a mode. If no rejection message corresponding to a certain schedule mode exists, the rejection message setting unit 161 may perform a mapping between a default rejection message and that schedule mode.

The incoming call processing unit 163 may compare information about an incoming call with the phonebook information 155 and output comparison results to the display unit 140. Additionally, the incoming call processing unit 163 may output a predefined feedback sound or ringtone, optionally together with a lamp and/or a vibration, in order to inform a user of the arrival of an incoming call. Meanwhile, when an incoming call arrives, the incoming call processing unit 163 may determine whether any schedule information is linked to the current time, and if schedule information is linked to the current time, then the incoming call processing unit 163 may further determine whether the electronic device 100 is located at a specific location registered in that schedule information. If the electronic device 100 is located at the registered location, the incoming call processing unit 163 may trigger a schedule mode set to the schedule information and also output, to the display unit 140, a virtual control key map including a call connection button, a call disconnection button, and a call rejection button. If the electronic device 100 is not located at the registered location or if no schedule information is linked to the current time, then the incoming call processing unit 163 may output a predefined incoming call reception screen to the display unit 140. The predefined incoming call reception screen may include a call connection button and a call disconnection button except for a call rejection button. Meanwhile, if an incoming call rejection mode is set, the incoming call processing unit 163 may directly notify the arrival of an incoming call to the rejection message processing unit 165 without informing a user about the arrival of an incoming call.

The rejection message processing unit 165 may transmit a particular rejection message associated with a current schedule mode to a caller device when a call rejection button displayed on the display unit 140 is selected. Alternatively, when the arrival of an incoming call is notified from the incoming call processing unit 163 in an incoming call rejection mode, the rejection message processing unit 165 may provide a predefined rejection message to a caller device and also perform a signal processing for rejecting an incoming call. This signal processing may include notifying a call rejection to a caller device, disconnecting an incoming call, and stopping a feedback of the arrival of an incoming call.

Meanwhile, the rejection message processing unit 165 may identify the phone number of a caller device, find corresponding classification information registered in the phonebook information 155, and provide a corresponding rejection message to the caller device. Alternatively, the rejection message processing unit 165 may determine the type of a rejection message by collecting necessary information such as a phone number or any other user information from a Social Network Service (SNS).

Detailed types of rejection messages will be fully described below with reference to screenshots. The above-discussed process of determining the type of a rejection message and transmitting the determined rejection message may be performed separately from or in connection with the operation of schedule information.

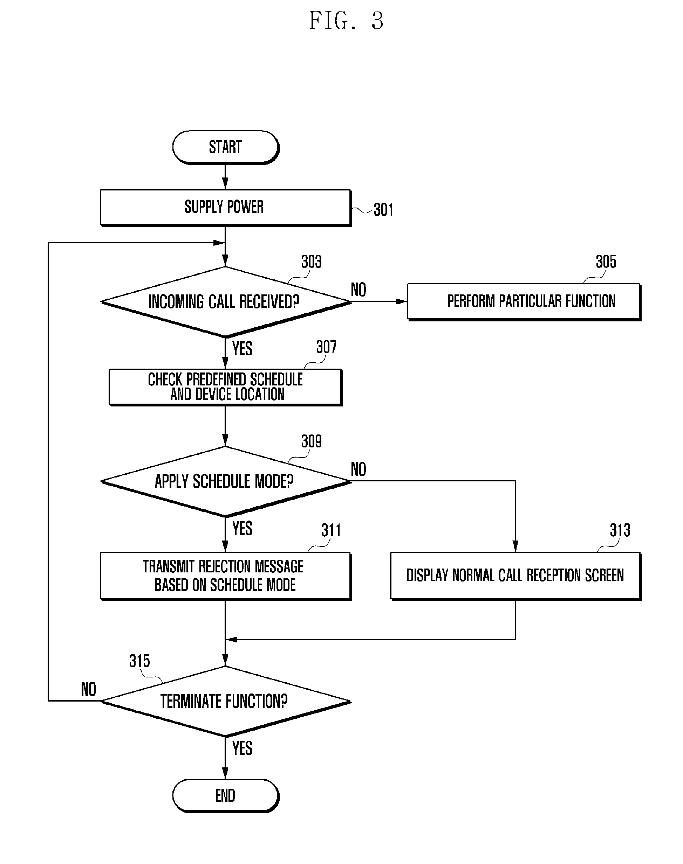

FIG. 3 is a flow diagram illustrating a method for providing a rejection message depending on a situation according to an embodiment of the present disclosure.

Referring to FIG. 3, at operation 301, the control unit 160 of the electronic device 100 may supply electric power to respective elements of the electronic device 100. Particularly, even in an idle mode, the control unit 160 may supply electric power to the communication unit 110 to provide a situation-dependent rejection message.

At operation 303, the control unit 160 may determine whether an incoming call arrives.

If the control unit 160 determines that no incoming call arrives at operation 303, then the control unit 160 may proceed to operation 305 at which the control unit 160 may perform a particular function of the electronic device 100. For example, the control unit 160 may perform a file play function, a broadcast reception function, a file search function, a web access function, a game function, or the like, depending on an input event.

If the control unit 160 determines that an incoming call arrives at operation 305, then the control unit 160 may proceed to operation 307 at which the control unit 160 may check a predefined schedule and the current location of the electronic device 100. Specifically, the control unit 160 may check schedule information stored in the memory unit 150 and determine whether any schedule information is linked to the current time. In addition, the control unit 160 may control the location information collecting unit 170 to collect location information of the electronic device 100.

Thereafter, at operation 309, the control unit 160 may determine whether to apply a schedule mode. Specifically, if schedule information is linked to the current time, the control unit 160 may determine whether the electronic device 100 is located at a specific location registered in schedule information, and thereby determine whether to apply a schedule mode.

If the control unit 160 determines to apply the schedule mode at operation 309, then the control unit 160 may proceed to operation 311. For example, if the control unit 160 determines that schedule information is linked to the current time and if the control unit 160 determines that the electronic device 100 is located at the registered location at operation 309, then the control unit 160 may proceed to operation 311 at which the control unit 160 may perform the transmission of a predefined rejection message based on a registered schedule mode. At this time, the control unit 160 may control the display unit 140 to display a rejection message transmission screen corresponding to a registered schedule mode. Namely, the control unit 160 may output a screen for indicating the arrival of an incoming call to the display unit 140 and further output an item for selecting the transmission of a rejection message to the display unit 140. When the above item is selected by a user, the control unit 160 may select and transmit a suitable rejection message. According to various embodiments of the present disclosure, such rejection messages may be predefined and stored. Related descriptions will be made below with reference to drawings.

Meanwhile, if the control unit 160 determines not to apply a schedule mode at operation 309, then the control unit 160 may proceed to operation 313. For example, if the control unit 160 determines that no schedule is linked to the current time or if the control unit 160 determines that the electronic device 100 is not located at the registered location at operation 309, then the control unit 160 may proceed to operation 313 at which the control unit 160 may output a normal incoming call reception screen to the display unit 140. This screen may include only a call connection button and a call disconnection button, or require the changeover of a screen to create a rejection message.

Thereafter, at operation 315, the control unit 160 may determine whether an input signal for terminating a rejection message providing function is received.

If the control unit 160 determines that an input signal for terminating a rejection message providing function is received at operation 315, then the control unit 160 may terminate the rejection message providing function which is being performed on the basis of a schedule mode. Namely, the control unit 160 may then perform, as default, operation 313 whenever an incoming call arrives.

In contrast, if the control unit 160 determines that no input signal for terminating the rejection message providing function is received at operation 315, then the control unit 160 may return to operation 303.

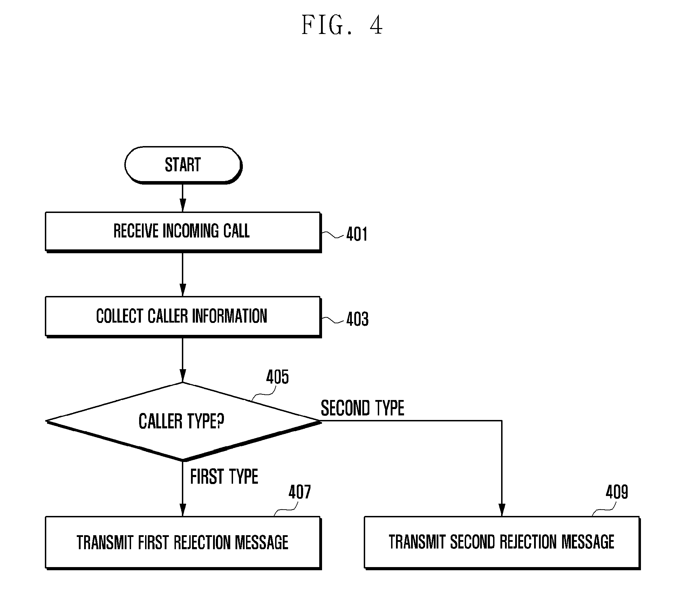

FIG. 4 is a flow diagram illustrating a method for providing a rejection message depending on a situation according to an embodiment of the present disclosure.

Referring to FIG. 4, at operation 401, the control unit 160 receives an incoming call. When an incoming call arrives at operation 401, the control unit 160 may proceed to operation 403.

At operation 403, the control unit 160 may collect caller information. For this, the control unit 160 may collect the phonebook information 155 stored in the memory unit 150 or collect a used history of SNS such as Twitter by a user of the electronic device 100 or a caller on the basis of related information such as a phone number. Collecting the caller information may make finding (e.g., determining) a relationship between a user and a caller possible. More specifically, the control unit 160 may check phonebook information corresponding to a caller's phone number and thereby identify a relationship between a caller and a user of the electronic device 100. For example, the control unit 160 may determine whether a caller is his senior, junior or friend. Such information may be obtained from a user's name called by a caller or a caller's name called by a user in SNS.

After caller information is collected at operation 403, the control unit 160 may proceed to operation 405 at which the control unit 160 may identify a caller type on the basis of the caller information.

If the control unit 160 determines that a caller type corresponds to a first type at operation 405, then the control unit 160 may proceed to operation 407 at which the control unit 160 may transmit the first predefined rejection message.

If the control unit 160 determines that a caller type corresponds to a second type, then the control unit 160 may proceed to operation 409 at which the control unit 160 may transmit the second predefined rejection message.

According to various embodiments of the present disclosure, in spite of the same situation, the control unit 160 may transmit different rejection messages depending on caller's types. For example, in a meeting situation, the first rejection message may be expressed in a relatively polite way such as "I'm in a meeting now. I'll call you soon.", whereas the second rejection message may be expressed shortly such as "Meeting now".

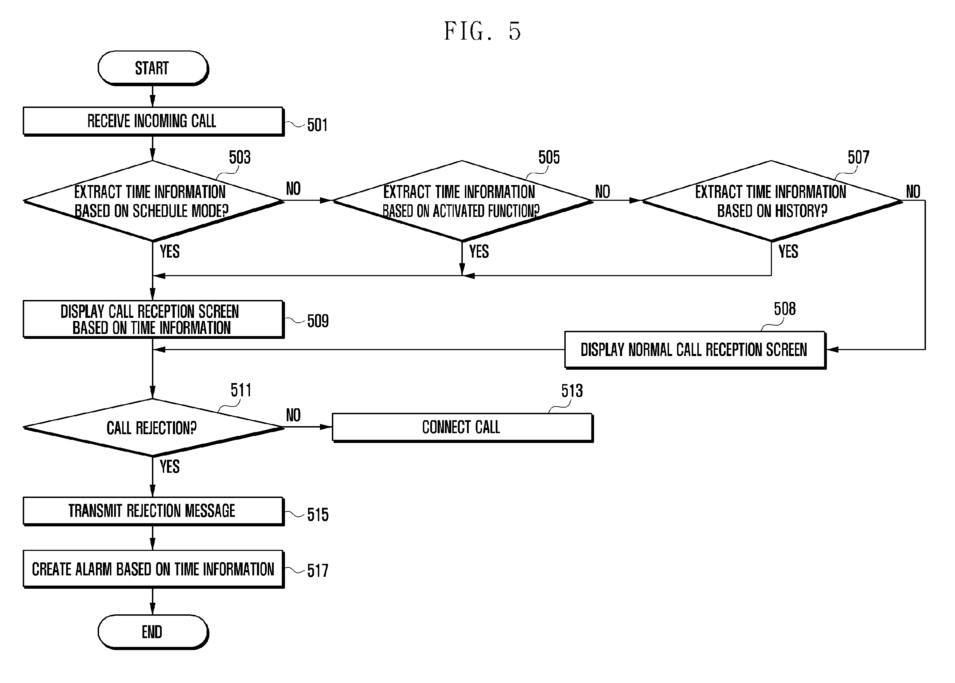

FIG. 5 is a flow diagram illustrating a method for providing a rejection message depending on a situation according to an embodiment of the present disclosure.

Referring to FIG. 5, at operation 501, the control unit 160 receives an incoming call.

The situation depend on which providing the rejection message may include the situation based on the schedule mode, the situation based on activated function and the situation based on the call rejection history.

When the control unit 160 receives an incoming call at operation 501, the control unit 160 may proceed to operation 503 at which the control unit 160 may determine whether to extract time information on the basis of a schedule mode. Namely, the control unit 160 may determine whether any schedule information is assigned (e.g., linked) to the current time (e.g., a time point when an incoming call arrives), further determine whether the electronic device 100 is located at a location registered in the schedule, and then extract time information about the expiration of the schedule.

If the control unit 160 determines that no schedule information is assigned (e.g., linked) to the current time or that the electronic device 100 is not located at the registered location at operation 503, then the control unit may proceed to operation 505 at which the control unit 160 may determine whether to extract time information on the basis of an activated function. Namely, the control unit 160 may identify the type of a user function being currently executed in the electronic device 100, determine whether the user function is set in advance to send a rejection message in response to an incoming call, and extract time information such as an expected expiration of the user function. For this, a user can set one or more user functions of the electronic device 100 to display an item for providing a rejection message in response to an incoming call, and also create rejection messages for respective user functions in advance. Further, a user can enter time information in a separate region rather than in a rejection message or add time information to a rejection message in parentheses.

If the control unit 160 determines that no activated function set to send a rejection message at operation 505, then the control unit 160 may proceed to operation 507 at which the control unit 160 may determine whether to perform a default mode to extract time information on the basis of a call rejection history. For example, the electronic device 100 may provide a menu item for selecting in advance a rejection message transmission mode based on a schedule mode, a rejection message transmission mode based on a user function, and a default mode for transmitting a rejection message based on a call rejection history.

If the control unit 160 determines that a default mode is selected at operation 507, then the control unit 160 may extract time information on the basis of a call rejection history in response to the arrival of an incoming call. The control unit 160 may proceed to operation 509.

If the control unit 160 determines that no rejection message transmission mode is selected at operation 507, then the control unit 160 may proceed to operation 508 at which the control unit 160 may output a normal incoming call reception screen.

After time information is extracted at operation 503, 505 or 507, the control unit 160 may proceed to operation 509 at which the control unit 160 may output an incoming call reception screen based on the extracted time information. For example, in case of the yes branch of operation 503, the control unit 160 may output an incoming call reception screen that includes an item for transmitting a rejection message on the basis of time information extracted according to a schedule mode. In case of the yes branch of operation 505, the control unit 160 may output an incoming call reception screen that includes an item for transmitting a rejection message on the basis of time information extracted according to the type of a user function. In case of the yes branch of operation 507, the control unit 160 may output an incoming call reception screen that includes an item for transmitting a rejection message on the basis of time information extracted according to a call rejection history.

Thereafter, at operation 511, the control unit 160 may determine whether the rejection message transmission item is selected from the incoming call reception screen.

If the control unit 160 determines that an input event for selecting a call connection occurs at operation 511, then the control unit 160 may proceed to operation 513 at which the control unit 160 may perform a particular function for a call connection at operation 513.

If the control unit 160 determines that the rejection message transmission item is selected at operation 511, then the control unit 160 may proceed to operation 515 at which the control unit 160 may transmit a predefined rejection message based on the extracted time information to a caller device.

Additionally, at operation 517, the control unit 160 may optionally (e.g., selectively) perform an automatic alarm function based on the extracted time information. Namely, when a current schedule expires, when any expiration time defined in a current user function arrives, or when a particular time corresponding to a call rejection history arrives, the control unit 160 may perform an alarm to inform a user that the arrival of an incoming call has been made. In addition, the control unit 160 may further output, to the display unit 140, information about a caller and the content of a rejection message transmitted to a caller device.

Thereafter, the control unit 160 may perform a return process for a particular user function of the electronic device 100. While any user function is performed in response to an input event or a sleep mode is maintained, the control unit 160 may perform again the above-discussed method in response to the arrival of an incoming call.

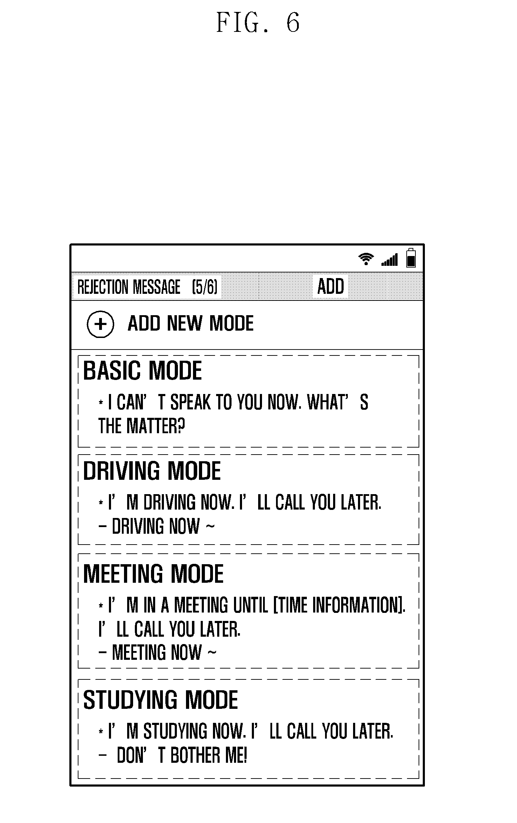

FIG. 6 illustrates a screenshot illustrating a setting mode for a rejection message according to an embodiment of the present disclosure.

Referring to FIG. 6, the electronic device 100 may provide various schedule modes for rejection messages discussed above. For example, the electronic device 100 may offer schedule modes such as a basic mode, a driving mode, a meeting mode, a studying mode, and/or the like. In addition, as illustrated in FIG. 6, the electronic device 100 may display a setting menu or screen for allowing a user to select and edit a desired schedule mode. When any schedule mode is selected, the electronic device 100 may display an overlay pop-up window for editing the selected schedule mode.

Additionally, the electronic device 100 may display the content of a rejection message defined as default for each schedule mode. For example, a basic mode may have a default rejection message as follows: "I can't speak to you now. What's the matter?" This basic mode may be available when no specific mode is selected.

Meanwhile, each of a driving mode, a meeting mode and a studying mode may have different rejection messages depending on caller types. For example, in a driving mode, the electronic device 100 may selectively transmit a rejection message as follows: "I'm driving now. I'll call you later." For this, as discussed above, the electronic device 100 may collect caller information such as phonebook information or SNS information, and thereby identify a caller type. Then, based on the identified type, a selected one of rejection messages may be transmitted to a caller device.

Additionally, the electronic device 100 may allow a user to edit or remove rejection messages assigned to respective modes. For example, in case of a meeting mode having different rejection messages, the electronic device 100 may remove a selected rejection message, "Meeting now". Then, in a meeting mode, the electronic device 100 will transmit the remaining rejection message as follows: "I'm in a meeting until [time information]. I'll call you later." In this message, time information in parentheses may refer to a finish time of a meeting.

Further, the electronic device 100 may offer a menu item, "Add New Mode". This menu item may allow a user to add a new mode, e.g., "On Vacation" or "In Travels", and also to create at least one rejection message associated with the new mode.

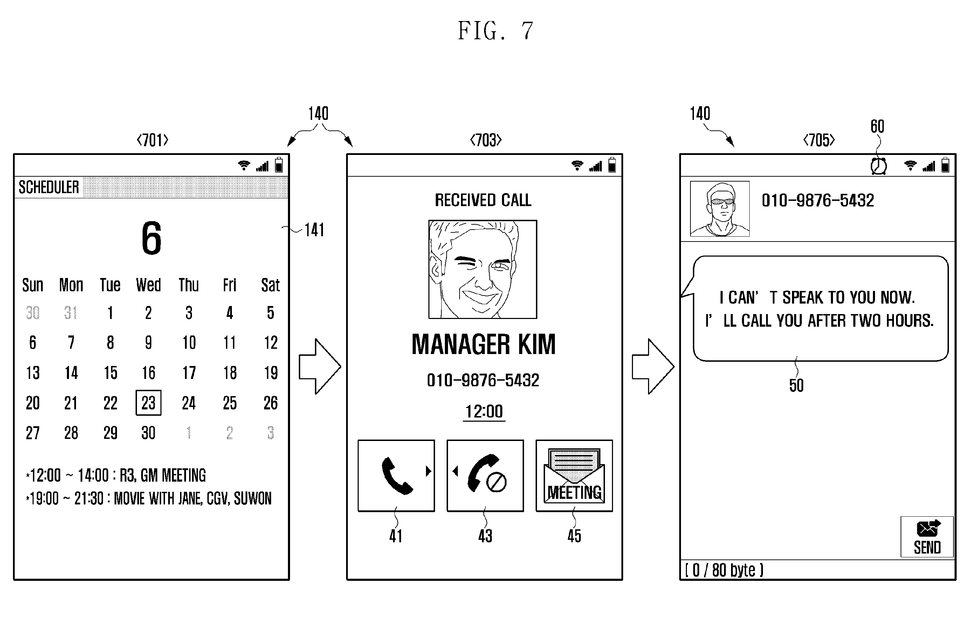

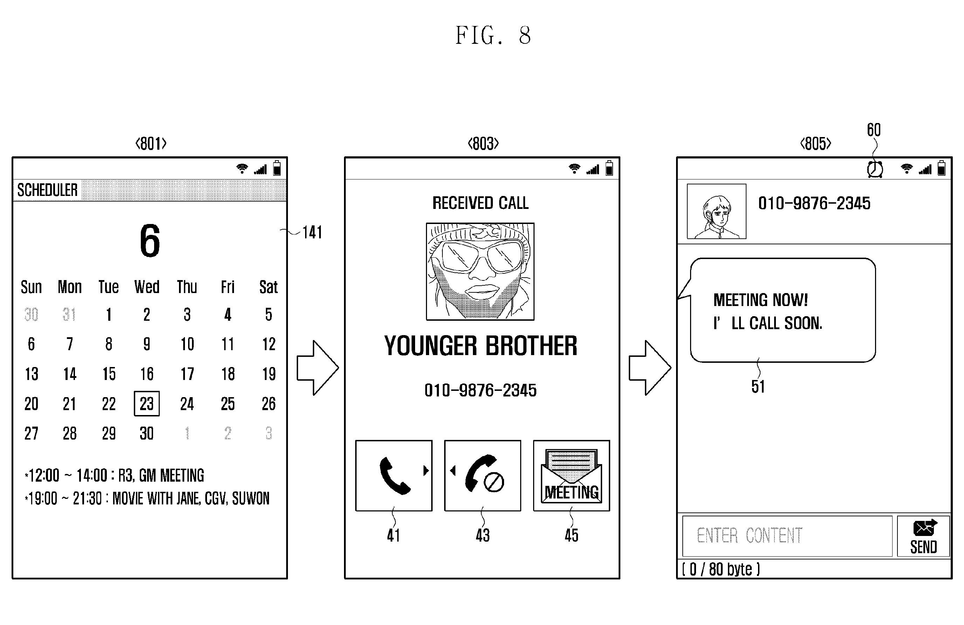

FIG. 7 illustrates screenshots illustrating a process of providing a rejection message depending on a situation according to an embodiment of the present disclosure.FIG. 8 illustrates screenshots illustrating a process of providing a rejection message depending on a situation according to an embodiment of the present disclosure.

Referring first to FIG. 7, as seen from screenshot 701, the electronic device 100 may output, to the display unit 140, a schedule screen 141 for indicating existing schedules and allowing the addition of a new schedule. A user can select a specific date from the schedule screen 141 and enter a schedule associated with the selected date.

When an incoming call is received from other device, the electronic device 100 may output an incoming call reception screen that includes a call connection item 41, a call disconnection item 43, and the first call rejection item 45 thereon as seen from screenshot 703. The first call rejection item 45 may be associated with a current schedule mode (e.g., a meeting mode), and displayed in the form of a specific icon representing the current schedule mode. Similarly, if the current schedule mode is a studying mode, the electronic device 100 may output as the first call rejection item 45 an icon representing a studying mode. To output the first call rejection item 45, the electronic device 100 may check a scheduler and determine whether schedule information is assigned (e.g., linked) to a time point when an incoming call arrives. In addition, the electronic device 100 may further check location information thereof and determine whether the electronic device 100 is located at a specific location registered in a schedule.

If a user selects the first call rejection item 45 from the incoming call reception screen, the electronic device 100 may output the predefined first rejection message 50 to the display unit 140 and allow a user to select the transmission of the first rejection message 50 as seen from screenshot 705. Alternatively, the electronic device 100 may immediately transmit the first rejection message 50 without a display thereof. Further alternatively, the electronic device 100 may temporarily display the first rejection message 50 only for a predetermined time and then automatically transmit the first rejection message 50 to a caller device. Time information included in the first rejection message 50 may be the rest of time to the expiration of a schedule and extracted from schedule information. For example, if an incoming call arrives at exactly noon and if a schedule is due to expire at two in the afternoon, two hours may be extracted as time information and entered in the first rejection message 50.

Meanwhile, the electronic device 100 may automatically set up an alarm for indicating that a history of an incoming call exists. In the above example, the electronic device 100 may automatically create an alarm set to a time point after two hours on the basis of extracted time information. Additionally, the electronic device 100 may output an alarm item 60 associated with the above-mentioned automatic alarm setup to an indicator region or any other region such that a user can be aware of the existence of alarm.

Compared to FIG. 7, FIG. 8 is characterized by the transmission of a rejection message on the basis of a caller type. Specifically, when an incoming call is received from other device in a situation where the schedule screen 141 has a certain schedule at a specific time today as seen from screenshot 801, the electronic device 100 may check schedule information and output the call connection item 41, the call disconnection item 43, and the first call rejection item 45 as seen from screenshot 803. If the first call rejection item 45 is selected by a user, the electronic device 100 may select and display the predefined second rejection message 51 instead of the first rejection message (50 illustrated in FIG. 7), depending on a caller type, as seen from screenshot 805. For this, the electronic device 100 may collect classification information about a caller device from phonebook information or SNS information, and thereby determine the transmission of the second rejection message 51. Namely, in spite of the same meeting mode as discussed in FIG. 7, the electronic device 100 in FIG. 8 may send the second rejection message 51 to a caller device, depending on a caller type.

Additionally, as discussed above, the electronic device 100 may output the alarm item 60 to the indicator region and also perform an automatic alarm setup. After two hours in this case, the electronic device 100 may output a feedback message indicating that a younger brother called two hours ago.

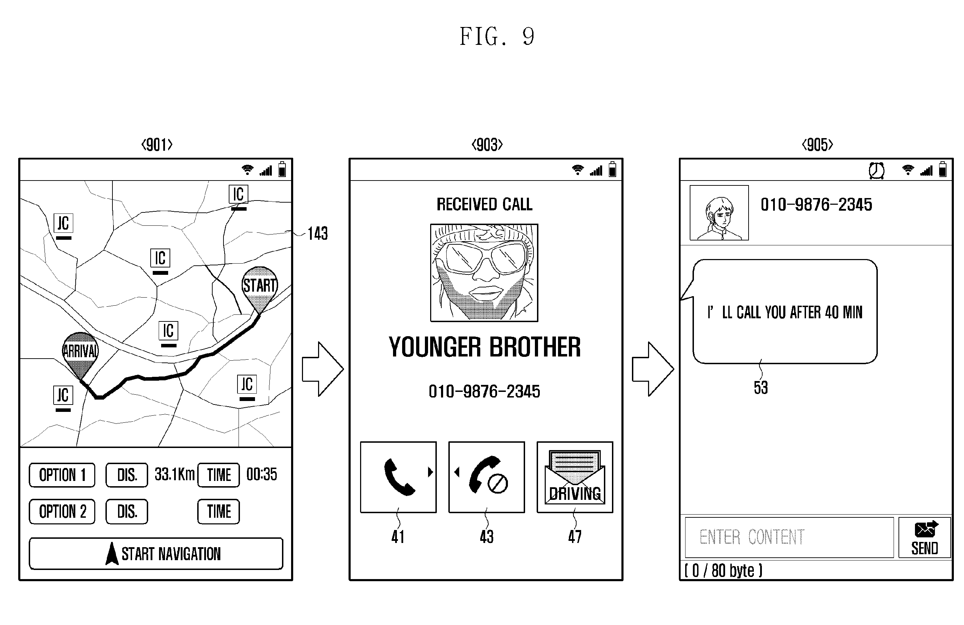

FIG. 9 illustrates screenshots illustrating a process of providing a rejection message depending on a situation according to an embodiment of the present disclosure.

Referring to FIG. 9, the electronic device 100 may activate a particular user function (e.g., a navigation function) in response to a user's request and output a related screen (e.g., a navigation screen 143) to the display unit 140 as seen from screenshot 901. After a starting point and a destination point are entered, the electronic device 100 may calculate a total distance of a travel path between both points and further calculate an estimated travel time. While moving, the electronic device 100 may receive location information in real time, update the navigation screen 143, and output a current location, a remaining distance, and an expected residual time.

While a navigation function is running, an incoming call may be received from other device. Then the electronic device 100 may determine whether an activated user function exists, and output the second call rejection item 47 on the basis of the activated user function (e.g., a navigation function in this case) as seen from screenshot 903. As illustrated in FIG. 9, the second call rejection item 47 may be formed of an icon representing a specific situation (e.g., a driving status in this case) associated with the activated user function. The electronic device 100 may also output the call connection item 41 and the call disconnection item 43.

When a user selects the second call rejection item 47, the electronic device 100 may display the predefined third rejection message 53 and further display a "Send" button that allows a user to select the transmission of the third rejection message 53 as illustrated in screenshot 905. Alternatively, as discussed above, the electronic device 100 may immediately transmit the third rejection message 53 in a state of screenshot 903 without a display illustrated in screenshot 905. Further alternatively, the electronic device 100 may temporarily display the third rejection message 53 only for a predetermined time and then automatically transmit the third rejection message 53 to a caller device.

The third rejection message 53 may be selected, further depending on a caller type, from rejection messages assigned to a driving mode. Time information (e.g., forty minutes as illustrated) included in the third rejection message 53 may be an expected remaining time to the completion of a current user function. Additionally, the electronic device 100 may perform an automatic alarm function based on such time information. Namely, when a current user function is completed (e.g., after forty minutes), the electronic device 100 may perform an alarm to inform a user that an incoming call was received. If two or more incoming calls exist, the electronic device 100 may offer a list of such incoming calls with respective received times.

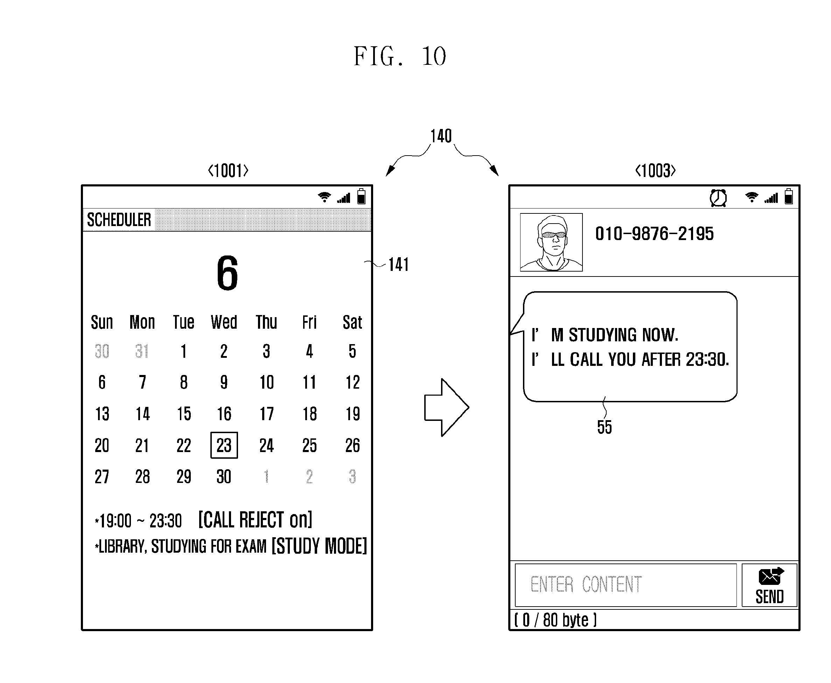

FIG. 10 illustrates screenshots illustrating a process of providing a rejection message depending on a situation according to an embodiment of the present disclosure.

Referring to FIG. 10, a user may assign a call rejection to a specific mode in a scheduling process. Specifically, as seen from screenshot 1001, the electronic device 100 may display the schedule screen 141 on the display unit 140 and set a specific mode (e.g., a studying mode) to a specific time period. In this case, the electronic device 100 may offer a menu item for allowing a user to select a call rejection in a specific mode. If a user toggles this item to an activated state, the electronic device 100 will reject any incoming call received within a specific time period.

When any incoming call arrives within the time period, the electronic device 100 may automatically transmit the predefined fourth rejection message 55 to a caller device without any display or alarm as seen from screenshot 1003. A screen illustrated in screenshot 1003 may be not displayed on the display unit 140 and processed through a background processing.

Meanwhile, upon receipt of an incoming call, the electronic device 100 may check a schedule to collect information about the expiration of a current mode, and create the fourth rejection message 55 using the collected information. For example, if the electronic device 100 determines from schedule information that a studying mode is ended at 23:30, the electronic device 100 may add a comment about availability after 23:30 to the fourth rejection message 55. In addition, the electronic device 100 may create one or more alarms for one or more incoming calls received within the time period of a studying mode, and output such alarms at once or sequentially after the elapse of the time period.

As fully discussed hereinbefore, the device 100 may selectively provide a rejection message suitable for a user's situation in response to an incoming call. Therefore, a caller can easily and properly understand a user's situation.

According to the trend of digital convergence, the above-discussed device 100 may essentially or selectively further include any other elements such as a short-range communication module, a wired or wireless communication interface, an Internet access module, a digital broadcast receiving and playing module, and the like. Meanwhile, as will be understood by those skilled in the art, some of the above-mentioned elements in the electronic device 100 may be omitted or replaced with another.

It will be appreciated that various embodiments of the present disclosure according to the claims and description in the specification can be realized in the form of hardware, software or a combination of hardware and software.

Any such software may be stored in a non-transitory computer readable storage medium. The non-transitory computer readable storage medium stores one or more programs (software modules), the one or more programs comprising instructions, which when executed by one or more processors in an electronic device, cause the electronic device to perform a method of the present disclosure.

Any such software may be stored in the form of volatile or non-volatile storage such as, for example, a storage device like a Read Only Memory (ROM), whether erasable or rewritable or not, or in the form of memory such as, for example, Random Access Memory (RAM), memory chips, device or integrated circuits or on an optically or magnetically readable medium such as, for example, a Compact Disk (CD), Digital Versatile Disc (DVD), magnetic disk or magnetic tape or the like. It will be appreciated that the storage devices and storage media are various embodiments of non-transitory machine-readable storage that are suitable for storing a program or programs comprising instructions that, when executed, implement various embodiments of the present disclosure. Accordingly, various embodiments provide a program comprising code for implementing apparatus or a method as claimed in any one of the claims of this specification and a non-transitory machine-readable storage storing such a program.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method for providing a rejection message based on a situation, the method comprising:
identifying a predefined situation mode when an incoming call arrives; and
displaying a call rejection item for allowing transmission of a rejection message on a call reception screen, the rejection message being created depending on the situation mode.

2. The method of claim 1, further comprising:
displaying the rejection message on the screen when the call rejection item is selected; and
transmitting the rejection message to a caller device associated with the incoming call when a specific input signal for requesting the transmission of the rejection message is received.

3. The method of claim 2, further comprising:
collecting a mode expiration time associated with the situation mode; and
adding the mode expiration time to the rejection message.

4. The method of claim 2, further comprising:
creating an alarm to inform a user about a received history of the incoming call.

5. The method of claim 4, wherein the creating of the alarm includes:
collecting a mode expiration time associated with the situation mode; and
assigning the alarm to the mode expiration time.

6. The method of claim 4, further comprising:
if there are received histories of two or more incoming calls, creating a list of the received histories; and
displaying the list at a specific time of the alarm.

7. The method of claim 2, further comprising:
collecting information about a caller device associated with the incoming call;
selecting one of a plurality of different rejection messages depending on a caller type extracted from the collected information, the plurality of different rejection messages having the same situation mode; and
transmitting the selected rejection message to the caller device.

8. The method of claim 1, further comprising:
transmitting the rejection message to a caller device associated with the incoming call while skipping the displaying of the call rejection item.

9. The method of claim 1, further comprising:
temporarily displaying the rejection message on the screen only for a predetermined time; and
transmitting the rejection message to a caller device associated with the incoming call.

10. The method of claim 1, wherein the displaying of the call rejection item includes displaying one of different icons each of which represents a situation mode.

11. The method of claim 1, further comprising:
extracting time information about at least one of an expiration of a current schedule, an expected expiration of a currently activated user function, and a time based on a call rejection history; and
creating the rejection message further depending on the extracted time information.

12. The method of claim 1, wherein the identifying of the situation mode includes:
determining whether a schedule is registered in the situation mode; and
determining whether a device receiving the incoming call is located at a location assigned to the schedule.

13. The method of claim 1, wherein the rejection message is at least one of an e-mail, a Short Message Service (SMS) message, a Multimedia Messaging Service (MMS) message, and a message transmitted over a Social Networking Service (SNS).

14. An electronic device for providing a rejection message based on a situation, the electronic device comprising:
a control unit configured to identify a predefined situation mode when an incoming call arrives, and to create a rejection message depending on the situation mode;
a display unit configured to display a call rejection item for allowing transmission of the rejection message on a call reception screen; and
a communication unit configured to receive the incoming call from a caller device.

15. The electronic device of claim 14, wherein the display unit is further configured to display the rejection message on the screen when the call rejection item is selected, and
wherein the communication unit is further configured to transmit the rejection message to the caller device when a specific input signal for requesting the transmission of the rejection message is received.

16. The electronic device of claim 15, wherein the control unit is further configured to collect a mode expiration time associated with the situation mode, and to add the mode expiration time to the rejection message.

17. The electronic device of claim 16, wherein the display unit is further configured to, if there are received histories of two or more incoming calls, display a list of the received histories at a specific time of the alarm.

18. The electronic device of claim 14, wherein the control unit is further configured to collect information about the caller device, to select one of a plurality of different rejection messages depending on a caller type extracted from the collected information, the plurality of different rejection messages having the same situation mode, and to control transmission of the selected rejection message to the caller device.

19. The electronic device of claim 14, wherein the control unit is further configured to control transmission of the rejection message to the caller device while skipping display of the call rejection item, or to control a temporary display of the rejection message on the screen only for a predetermined time and a subsequent transmission of the rejection message to the caller device.

20. The electronic device of claim 14, wherein the display unit is further configured to display one of different icons each of which represents a situation mode.

21. The electronic device of claim 14, wherein the control unit is further configured to determine whether a schedule is registered in the situation mode, and to determine whether the device is located at a location assigned to the schedule.

22. The electronic device of claim 14, wherein the rejection message is at least one of an e-mail, a Short Message Service (SMS) message, a Multimedia Messaging Service (MMS) message, and a message transmitted over a Social Networking Service (SNS).

23. A computer-readable storage medium storing instructions that, when executed, cause at least one processor to perform the method of claim 1.
